# EUROPEAN PATENT APPLICATION

(11) **EP 4 832 068 A1**
(43) Date of publication of application: **28.10.2026**
(21) Application number: 24908155.5
(22) Date of filing: 20.12.2024
(51) Int. Cl.: H01M 4/131, H01M 4/62, H01M 4/525, H01M 4/505, H01M 10/052, H01M 4/02

(54) **COMPOSITION FOR MANUFACTURING CATHODE, CATHODE FOR SECONDARY BATTERY, AND SECONDARY BATTERY**

(30) Priority: 20.12.2023 KR 20230186811
(71) Applicant: SK On Co., Ltd., Seoul 03161 (KR)
(72) Inventor: LEE, Jong Hyeok, Daejeon 34124 (KR); GIL, Na Eun, Daejeon 34124 (KR); KIM, Min Cheol, Daejeon 34124 (KR); KIM, Hyun Ji, Daejeon 34124 (KR); JO, Yoon Ji, Daejeon 34124 (KR); HWANG, Chang Mook, Daejeon 34124 (KR)
(74) Representative: Stolmár & Partner Patentanwälte PartG mbB
(86) International application number: PCT/KR2024/020817
(87) International publication number: WO 2025/135873

(57) **Abstract**

A cathode for a secondary battery according to an embodiment of the present disclosure includes a cathode current collector; and a cathode mixture layer disposed on at least one surface of the cathode current collector and comprising a cathode active material and a polymer, wherein the polymer comprises a vinylidene-based polymer containing a halogen element, and the polymer has a crystallinity of 10 to 60% or less.

## Description

### [Field]

The embodiments of the present disclosure relate to a composition for manufacturing cathodes, cathodes for secondary batteries, and secondary batteries.

### [Background technology]

With the increasing development of and demand for mobile devices, the demand for secondary batteries as an energy source is rapidly growing. Among such secondary batteries, lithium secondary batteries, which exhibit high energy density and operating potential, exhibit a long cycle life and a low self-discharge rate, have been commercialized and are widely used.

Furthermore, with growing concern for environmental issues, there has been a surge in research on electric vehicles (EV) and hybrid electric vehicles (HEV) as alternatives to fossil fuel-powered vehicles, such as gasoline and diesel vehicles, which are major contributors to air pollution. Lithium secondary batteries, which offer high energy density, high discharge voltage, and stable output, are primarily being researched and used as power sources for these electric vehicles (EV) and hybrid electric vehicles (HEV).

These lithium secondary batteries are generally manufactured by stacking or winding a cathode and an anode with a separator interposed therebetween, and then encasing them together with an electrolyte in a secondary battery case.

In this case, the electrode is manufactured by coating an electrode active material slurry, prepared by mixing an electrode mixture including an electrode active material, a conductive material, and a binder for adhering them to a metal current collector in an organic solvent, onto the metal current collector, followed by drying and rolling.

Subsequently, the electrode is wound into a roll shape and undergoes vacuum drying using hot air supplied into a chamber. The temperature of the hot air used for this process is determined with the aim of removing residual solvent and moisture; therefore, it is common to conduct the process under various temperature conditions, taking into account the active material composition of the electrode and the thickness of the electrode mixture layer.

Meanwhile, the binder included in the electrode composite layer is primarily a crystalline polymer; specifically, polyvinylidene fluoride (PVDF) may be used as the binder for the cathode. Such a binder serves to bind the active material particles together and to maintain the adhesive strength at the interface between the electrode mixture layer containing the active material particles and the current collector. However, the physical properties of the electrode mixture layer can vary depending on the temperature conditions during the vacuum drying process, which can lead to a decline in the performance of the secondary battery.

Therefore, there is a need for research into new cathodes that can prevent the degradation of secondary battery performance.

### [Detailed Description of the Invention]

### [Technical Problem]

The embodiments of the present disclosure provide a composition for manufacturing a cathode, which can prevent the cathode from expansion, a cathode for a secondary battery, and a secondary battery.

The secondary battery according to an embodiment of the present disclosure can be widely applied in green technology fields such as electric vehicles, battery charging stations, and other battery-powered applications like solar power generation and wind power generation.

### [Technical solutions]

A cathode for a secondary battery according to an embodiment of the disclosure includes: a cathode current collector; and a cathode mixture layer disposed on at least one surface of the cathode current collector and including a cathode active material and a polymer, wherein the polymer includes a vinylidene-based polymer containing a halogen element, and the polymer has a crystallinity of 10% to 60%.

In an embodiment, the polymer may include a polyvinylidene fluoride (PVDF)-based polymer.

In an embodiment, the cathode may further include a plasticizer.

In an embodiment, the plasticizer may have a molecular weight of 200 g/mol to 500 g/mol.

In an embodiment, the plasticizer may include at least one selected from the group consisting of acetyltributyl citrate, dibutyl sebacate, diisooctyl azelate, triethyl citrate, glyceryl triacetate, dioctyl adipate, and polyethylene glycol.

A composition for manufacturing a cathode according to an embodiment of the present disclosure includes: a cathode active material, a polymer, and a plasticizer, wherein the polymer includes a vinylidene-based polymer containing a halogen element, and the plasticizer may have a molecular weight of 200 g/mol to 500 g/mol.

In an embodiment, the polymer may include a polyvinylidene fluoride (PVDF)-based polymer.

In an embodiment, the plasticizer may be contained in an amount of 0.1 wt% to 1 wt% based on total solids of the composition.

In an embodiment, the composition may further include an organic solvent.

In an embodiment, the plasticizer may be soluble in the organic solvent.

In an embodiment, the plasticizer may include at least one selected from the group consisting of acetyltributyl citrate, dibutyl sebacate, diisooctyl azelate, triethyl citrate, glyceryl triacetate, dioctyl adipate, and polyethylene glycol.

A secondary battery according to an embodiment of the present disclosure includes: a cathode; and an anode, the cathode including: a cathode current collector; and a cathode mixture layer disposed on at least one surface of the cathode current collector and including a cathode active material and a polymer, wherein the polymer includes a vinylidene-based polymer containing a halogen element, and the polymer has a crystallinity of 10% to 60%.

In an embodiment, the polymer may include a polyvinylidene fluoride (PVDF)-based polymer.

In an embodiment, the cathode may include a plasticizer.

In an embodiment, the plasticizer may include at least one selected from the group consisting of acetyltributyl citrate, dibutyl sebacate, diisooctyl azelate, triethyl citrate, glyceryl triacetate, dioctyl adipate, and polyethylene glycol.

In an embodiment, the secondary may further include a separator interposed between the cathode and the anode.

### [Effect]

According to the present disclosure, a composition for manufacturing a cathode, which can prevent the cathode from expansion, a cathode for a secondary battery, and a secondary battery are provided.

Furthermore, according to the present disclosure, a composition for manufacturing a cathode, a cathode for a secondary battery, and a secondary battery, in which a cathode mixture layer is improved in adhesion, are provided.

### [Description of the drawing]

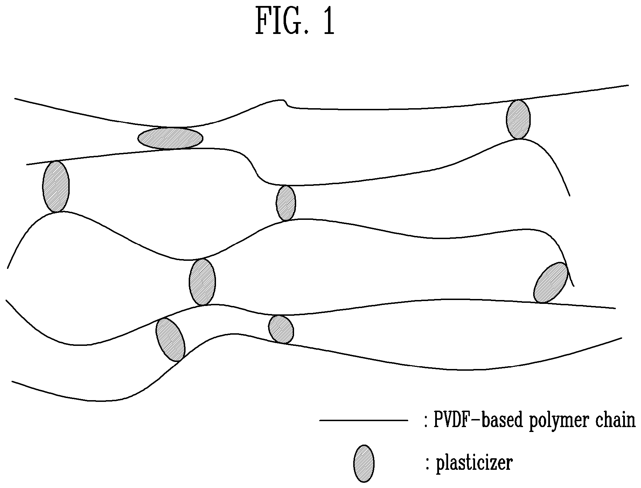

FIG. 1 is a diagram illustrating the structure of a polyvinylidene fluoride (PVDF) based polymer included in a cathode for a secondary battery according to an embodiment of the present disclosure.

### [Embodiments]

The structural or functional descriptions of the embodiments disclosed in this specification or application are provided merely for the purpose of illustrating embodiments in accordance with the technical concept of the present invention; embodiments in accordance with the technical concept of the present invention may be implemented in various forms other than those disclosed in this specification or application, and the technical concept of the present invention is not to be construed as being limited to the specific embodiments described in this specification or application.

### Cathode for secondary battery

In one aspect of the present disclosure, a cathode for a secondary battery is provided, including: a cathode current collector; and a cathode mixture layer formed on at least one surface of the cathode current collector and including a cathode active material and a polymer; wherein the polymer includes a vinylidene-based polymer containing a halogen element, and the crystallinity of the polymer is 10% to 60%.

Hereinafter, the cathode for a secondary battery provided in one aspect of the present disclosure will be described in detail with respect to each component.

First, the cathode for a secondary battery provided in one aspect of the present disclosure includes a cathode current collector.

The cathode current collector may include stainless steel, nickel, aluminum, titanium, or alloys thereof. The cathode current collector may also include aluminum or stainless steel surface-treated with carbon, nickel, titanium, or silver. The cathode current collector may be, for example, 10 µm to 50 µm, though this is not limited thereto.

Next, the cathode for a secondary battery provided in one aspect of the present disclosure includes a cathode mixture layer.

The cathode mixture layer is formed on at least one surface of the cathode current collector.

The cathode mixture layer includes a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn), and aluminum (Al).

In some embodiments, the cathode active material or the lithium-nickel metal oxide may include a layered or crystalline structure represented by the following Chemical Formula 1.

[Chemical Formula 1] LiₓNiₐM_{b}O_{2+z}

In Chemical Formula 1, 0.9 ≤ x ≤ 1.2, 0.6 ≤ a ≤ 0.99, 0.01 ≤ b ≤ 0.4, and -0.5 ≤ z ≤ 0.1. As described above, M may include Co, Mn, and/or Al.

The chemical structure shown in Chemical Formula 1 illustrates the bonding relationships within the layered or crystalline structure of the cathode active material and does not exclude the presence of additional elements. For example, M includes Co and/or Mn, and Co and/or Mn may serve as the main active elements of the cathode active material together with Ni. Chemical Formula 1 is provided to express the bonding relationships of the aforementioned main active elements and should be understood as an expression that encompasses the introduction and substitution of additional elements.

In an embodiment, in addition to the main active element, auxiliary elements may be further included to enhance the chemical stability of the cathode active material or the layered/crystalline structure. The auxiliary elements may be incorporated into the layered/crystalline structure to form bonds, and in this case, they should be understood to fall within the scope of the chemical structure represented by Chemical Formula 1.

The auxiliary elements may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may also act as an auxiliary active element, such as Al, that contributes to the capacity/power activity of the cathode active material together with Co or Mn.

For example, the cathode active material or the lithium-nickel metal oxide may include a layered structure or crystalline structure represented by Chemical Formula 1-1 below.

[Chemical Formula 1-1] LiₓNiₐM1_{b1}M2_{b2}O_{2+z}

In Chemical Formula 1, M1 may include Co, Mn, and/or Al. M2 may include the aforementioned auxiliary elements. In Chemical Formula 1-1, 0.9 ≤ x ≤ 1.2, 0.6 ≤ a ≤ 0.99, 0.01 ≤ b1 + b2 ≤ 0.4, and -0.5 ≤ z ≤ 0.1.

The cathode active material may further include coating elements or doping elements. For example, elements that are substantially the same as or similar to the aforementioned auxiliary elements may be used as coating elements or doping elements. For example, any of the aforementioned elements, either alone or in combinations of two or more, may be used as coating elements or doping elements.

The coating elements or doping elements may be present on the surface of the lithium-nickel metal oxide particles, or they may penetrate through the surface of the lithium-nickel metal composite oxide particles and be incorporated into the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni can serve as a transition metal that influences the power and capacity of lithium secondary batteries. Therefore, as described above, by incorporating a high-Ni composition into the cathode active material, it is possible to provide a high-capacity cathode and a high-capacity lithium secondary battery.

However, as the Ni content increases, the long-term storage stability and cycle stability of the cathode or secondary battery may deteriorate, and side reactions with the electrolyte may also increase. Nevertheless, according to the illustrative embodiments, the inclusion of Co allows for the maintenance of electrical conductivity while improving cycle stability and capacity retention through the use of Mn.

The Ni content (e.g., the molar fraction of nickel relative to the total molar fraction of nickel, cobalt, and manganese) in the above NCM-based lithium oxide may be 0.6 or higher, 0.7 or higher, or 0.8 or higher. In some embodiments, the Ni content may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, for example, Mn-rich active materials, LLO (Li-rich layered oxide)/OLO (over-lithiated oxide) active materials, or Co-less active materials having a chemical structure or crystalline structure represented by, for example, Chemical Formula 2.

[Chemical Formula 2] p[Li₂MnO₃]·(1-p)[Li_{q}JO₂]

In Chemical Formula 2, 0 < p < 1 and 0.9 ≤ q ≤ 1.2, and J may include at least one element selected from Mn, Ni, Co, Fe, Cr, V, Cu, Zn, Ti, Al, Mg, and B.

In addition, the cathode mixture layer contains a polymer (which can be used as a binder). In an embodiment, the polymer may be a vinylidene-based polymer containing a halogen element, wherein the halogen element may be fluorine, chlorine, bromine, or iodine; specifically, it may be fluorine.

In an embodiment, the polymer may be a polyvinylidene fluoride (PVDF)-based polymer. The polyvinylidene fluoride (PVDF)-based polymer may include, for example, at least one selected from the group consisting of polyvinylidene fluoride (PVDF), polyvinylidene fluoride-hexafluoropropylene (PVDF-HFP), polyvinylidene fluoride-trifluoroethylene (PVDF-TrFE), polyvinylidene fluoride-tetrafluoroethylene (PVDF-TFE), and polyvinylidene fluoride-chlorofluoroethylene (PVDF-CTFE).

In an embodiment, the crystallinity of the polymer may be 60% or less; more specifically, it may be 55% or less; more specifically still, it may be 50% or less; and most specifically, it may be 40% or less. When the crystallinity of the polymer is within the aforementioned range, expansion of the cathode can be effectively suppressed, and adhesion performance within the electrode can be improved. Furthermore, the crystallinity of the polymer may be 10% or more; more specifically, 20% or more; more specifically still, 30% or more; even more specifically, 40% or more; and most specifically, 45% or more. When the crystallinity of the polymer falls within the aforementioned range, expansion of the cathode can be effectively suppressed, and adhesion performance within the electrode can be improved. Furthermore, the resistance of the electrode can be controlled within an appropriate range.

In an embodiment, the cathode may contain a plasticizer, and specifically, the polymer described above may contain a plasticizer. In an embodiment, the vinylidene-based polymer containing a halogen element (specifically, a PVDF-based polymer) may include a plurality of PVDF polymer chains, and as shown in FIG. 1, the plasticizer may penetrate between the vinylidene-based polymer chains containing the halogen element. As the plasticizer penetrates between the vinylidene-based polymer chains containing halogen elements, the interchain forces weaken, and at the same time, the free volume increases, thereby securing space for the polymer chains to move. By incorporating a plasticizer, the degree of crystallinity of the vinylidene-based polymers containing halogen elements can be adjusted within the range described above.

In an embodiment, the molecular weight of the plasticizer may be between 200 g/mol and 500 g/mol. When the molecular weight of the plasticizer falls within the aforementioned range, the plasticizer can easily penetrate between the polymer chains.

For example, the plasticizer may include at least one selected from the group consisting of acetyltributyl citrate (ATBC), dibutyl sebacate (DBS), diisooctyl azelate (DOZ), triethyl citrate (TEC), glyceryl triacetate (GTA), dioctyl adipate (DOA), and polyethylene glycol (PEG), but is not limited thereto.

In an embodiment, the degree of expansion of the cathode for a secondary battery provided by one aspect of the present disclosure may be 0.48% or less; more specifically, 0.42% or less; more specifically still, 0.37% or less; and most specifically, 0.32% or less.

Furthermore, in the embodiment, the adhesion of the cathode mixture layer to the cathode current collector can be improved by controlling the crystallinity of the vinylidene-based polymer, which contains halogen elements and can be used as a binder, to an appropriate level. For example, the adhesion of the cathode mixture layer to the cathode current collector may be 0.42 N or more; more specifically, 0.45 N or more; more specifically still, 0.5 N or more; and most specifically, 0.55 N or more.

In other words, by using a plasticizer to control the crystallinity of the vinylidene-based polymer, i.e., a binder containing halogen elements used in the cathode of a secondary battery, it is possible not only to suppress the expansion of the cathode but also to improve the adhesion between the cathode current collector and the cathode mixture layer.

In the embodiment, the cathode for a secondary battery provided in one aspect of the present disclosure may further include a conductive material. The conductive material may be added to enhance the conductivity and/or the mobility of lithium ions or electrons in the cathode mixture layer. For example, the conductive material may include graphite, carbon black, acetylene black, Ketjen black, graphene, carbon nanotubes, VGCF (vapor-grown carbon fiber), carbon fibers, and other carbon-based conductive materials, and/or metal-based conductive materials such as tin, tin oxide, titanium oxide, LaSrCoO₃, and LaSrMnO₃, but is not limited thereto.

### Cathode manufacturing composition

In another aspect of the present disclosure, a composition for manufacturing a cathode is provided, including a cathode active material, a polymer, and a plasticizer, wherein the polymer includes a vinylidene-based polymer containing a halogen element, and the molecular weight of the plasticizer may be 200 g/mol to 500 g/mol.

Hereinafter, the composition for manufacturing a cathode provided in another aspect of the present disclosure will be described in detail with respect to each component.

First, the composition for manufacturing a cathode provided in another aspect of the present disclosure includes a cathode active material. As described above, the cathode active material may include a compound capable of reversibly intercalating and deintercalating lithium ions. Specific details regarding the cathode active material will not be repeated here.

Next, the composition for manufacturing a cathode provided in another aspect of the present disclosure includes a polymer that can be used as a binder, wherein the polymer is as described above.

Specifically, the polymer may include a vinylidene-based polymer containing a halogen element; more specifically, a polyvinylidene fluoride (PVDF)-based polymer may be included in a composition for manufacturing a cathode as a binder. Polyvinylidene fluoride (PVDF)-based polymers include, as described above, at least one selected from the group consisting of polyvinylidene fluoride (PVDF), polyvinylidene fluoride-hexafluoropropylene (PVDF-HFP), polyvinylidene fluoride-trifluoroethylene (PVDF-TrFE), polyvinylidene fluoride-tetrafluoroethylene (PVDF-TFE), and polyvinylidene fluoride-chlorofluoroethylene (PVDF-CTFE).

Next, the composition for preparing a cathode provided in another aspect of the present disclosure includes a plasticizer. The molecular weight of the plasticizer may be between 200 g/mol and 500 g/mol. When the molecular weight of the plasticizer falls within the aforementioned range, the plasticizer can easily penetrate between the polymer chains.

As described above, the plasticizer may include at least one selected from the group consisting of acetyltributyl citrate (ATBC), dibutyl sebacate (DBS), diisooctyl azelate (DOZ), triethyl citrate (TEC), glyceryl triacetate (GTA), dioctyl adipate (DOA), and polyethylene glycol (PEG), but is not limited thereto.

In the embodiment, the plasticizer may be contained in an amount of 0.1 wt% to 1 wt% based on the total solids of the composition for manufacturing the cathode, and more specifically 0.15 wt% to 0.7 wt%, even more specifically 0.25 wt% to 0.55 wt%, and most specifically 0.35 wt% to 0.45 wt%. When the content of the plasticizer is within the aforementioned range, the expansion of the cathode can be effectively suppressed.

Furthermore, the composition for manufacturing a cathode provided in another aspect of the present disclosure may further include an organic solvent. In the embodiment, the plasticizer may be soluble in the organic solvent. For example, the organic solvent may include, but is not limited to, N-methyl-2-pyrrolidone (NMP), dimethylformamide, dimethylacetamide, N,N-dimethylaminopropylamine, ethylene oxide, and tetrahydrofuran.

Furthermore, the composition for manufacturing a cathode provided in another aspect of the present disclosure may further include a conductive material. The conductive material may be added to enhance the conductivity and/or the mobility of lithium ions or electrons in the cathode mixture layer. For example, the conductive material may include carbon-based conductive materials such as graphite, carbon black, acetylene black, Ketjen black, graphene, carbon nanotubes, vapor-grown carbon fiber (VGCF), and carbon fibers, and/or metal-based conductive materials including perovskite materials such as tin, tin oxide, titanium oxide, LaSrCoO₃, and LaSrMnO₃, but is not limited thereto.

In the embodiment, the conductive material may be included in an amount of 0.01 wt% to 10 wt% based on the total solids in the composition for manufacturing the cathode; more specifically, it may be included in an amount of 0.1 weight percent or more, or 0.3 weight percent or more, and may be included in an amount of 5 weight percent or less, 3 weight percent or less, or 1 weight percent or less.

Furthermore, the composition for manufacturing a cathode provided in another aspect of the present disclosure may further include thickeners and/or dispersants, as needed. As one example, the composition for manufacturing a cathode may include a thickener such as carboxymethyl cellulose (CMC).

In an embodiment, the aforementioned cathode for a secondary battery can be manufactured by coating the cathode current collector with a cathode manufacturing composition provided in another aspect of the present disclosure. More specifically, after coating the cathode current collector with the cathode manufacturing composition provided in another aspect of the present disclosure, drying and rolling the material can produce a cathode for a secondary battery in which a cathode mixture layer is formed on the cathode current collector. The coating process may be carried out using methods such as gravure coating, slot die coating, multi-layer simultaneous die coating, imprinting, doctor blade coating, dip coating, bar coating, and casting, but is not limited thereto.

The crystallinity of vinylidene-based polymer (specifically, PVDF-based polymer) containing halogen elements, which is used as a binder in the aforementioned cathode manufacturing process and the secondary battery preparing process described below, may increase. However, according to the present disclosure, by including an appropriate plasticizer in the composition for manufacturing a cathode or within the cathode for a secondary battery, the increase in the crystallinity of the vinylidene-based polymer (specifically, a PVDF-based polymer) containing halogen elements can be controlled, thereby ultimately obtaining a cathode for a secondary battery having an appropriate range of crystallinity.

### Secondary battery

In another aspect of the present disclosure, the battery includes a cathode; an anode; and a separator interposed between the cathode and the anode; wherein the cathode is formed on a cathode current collector; and a cathode mixture layer formed on at least one surface of the cathode current collector, including a cathode active material and a polyvinylidene fluoride (PVDF)-based polymer having the crystallinity of 60% or less.

Hereinafter, the secondary battery provided in another aspect of the present disclosure will be described in detail with respect to each component.

First, the secondary battery provided in this aspect of the present disclosure includes a cathode. As described above, the cathode includes a cathode current collector and a cathode mixture layer. The cathode mixture layer includes an active material and a polymer; the polymer may include a vinylidene-based polymer containing a halogen element, and the crystallinity of the polymer is 10 to 60% or less.

The cathode included in the secondary battery provided in another aspect of the present disclosure is subject to all the descriptions regarding the cathode for the secondary battery described above; therefore, it will not be described again.

Next, the secondary battery provided in another aspect of the present disclosure includes an anode.

The anode may include an anode current collector and an anode mixture layer disposed on at least one surface of the anode current collector.

Non-limiting examples of the anode current collector include copper foil, nickel foil, stainless steel foil, titanium foil, nickel foam, copper foam, and polymer substrates coated with a conductive metal. The thickness of the anode current collector may be, for example, 10 µm to 50 µm, but is not limited thereto.

The anode mixture layer may contain an anode active material. Materials capable of adsorbing and desorbing lithium ions may be used as the anode active material. For example, the anode active material may include carbon-based materials such as crystalline carbon, amorphous carbon, carbon composites, and carbon fibers; lithium metal; lithium alloys; silicon (Si)-containing materials; or tin (Sn)-containing materials.

Examples of the aforementioned amorphous carbon include hard carbon, soft carbon, coke, mesocarbon microbeads (MCMB), and mesophase pitch-based carbon fibers (MPCF).

Examples of such crystalline carbon include graphite-based carbons such as natural graphite, synthetic graphite, graphitized coke, graphitized MCMB, and graphitized MPCF.

The lithium metal may be pure lithium metal or lithium metal with a protective layer formed to suppress dendrite growth. In an embodiment, a lithium metal-containing layer deposited or coated on the anode current collector may be used as the anode active material layer. In an embodiment, a thin lithium film layer may also be used as the anode active material layer.

Examples of elements included in the lithium alloy include aluminum, zinc, bismuth, cadmium, antimony, silicon, lead, tin, gallium, or indium.

The silicon-containing material may provide enhanced capacity characteristics. The silicon-containing material may include Si, SiOₓ(0<x<2), metal-doped SiOₓ(0<x<2), and silicon-carbon composites. The metal may include lithium and/or magnesium, and metal-doped SiOₓ(0<x<2) may include metal silicates.

The anode mixture layer may include the aforementioned substances that can be used in the manufacture of the cathode, such as binders, conductive materials, and thickeners. In some embodiments, styrene-butadiene rubber (SBR)-based binders, carboxymethyl cellulose (CMC), polyacrylic acid-based binders, and poly(3,4-ethylenedioxythiophene) (PEDOT)-based binders may be used as the anode binder.

Next, the secondary battery provided in another aspect of the present disclosure includes a separator.

A separator may be interposed between the cathode and the anode. The separator is configured to prevent electrical short-circuiting between the cathode and the anode and to allow the flow of ions therethrough. Depending on the embodiment, the thickness of the separator may be 10 µm to 20 µm, but the present disclosure is not limited thereto.

For example, the separator may include a porous polymer film or a porous nonwoven fabric. The porous polymer film may include polyolefin-based polymers such as ethylene polymers, propylene polymers, ethylene/butene copolymers, ethylene/hexene copolymers, and ethylene/methacrylate copolymers. The porous nonwoven fabric may include high-melting-point glass fibers, polyethylene terephthalate (PET) fibers, or the like. The separator may also include ceramic-based materials. For example, inorganic particles may be coated onto the polymer film or dispersed within the polymer film to improve heat resistance.

The separator may have a single-layer or multi-layer structure including the polymer film and/or nonwoven fabric described above.

According to exemplary embodiments, the cathode, the anode, and the separator may be repeatedly arranged to form an electrode assembly. In some embodiments, the electrode assembly may be of a winding type, a stacking type, a zigzag folding type, or a stack-folding type.

Furthermore, the secondary battery provided in another aspect of the present disclosure may further include an electrolyte. In an embodiment, the secondary battery provided in another aspect of the present disclosure may be defined such that the above-described electrode assembly is accommodated together with the electrolyte in a case. According to exemplary embodiments, a non-aqueous electrolyte may be used as the electrolyte.

The non-aqueous electrolyte may include a lithium salt as the electrolyte and an organic solvent; the lithium salt may be represented, for example, as Li⁺X⁻,and examples of the anions (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ , and (CF₃CF₂SO₂)₂N⁻.

The organic solvent may include organic compounds that have sufficient solubility for the lithium salt and additives and are non-reactive within the battery. For example, the organic solvent may include at least one of carbonate-based solvents, ester-based solvents, ether-based solvents, ketone-based solvents, alcohol-based solvents, and aprotic solvents. Examples of such organic solvents include propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethyl sulfoxide, acetonitrile, dimethoxyethane, diethoxyethane, sulfolane, gamma-butyrolactone, and propylene sulfite, among others. These may be used alone or in combination of two or more thereof.

The non-aqueous electrolyte may further contain an additive. The additive may include, for example, a cyclic carbonate compound, a fluorine-substituted carbonate compound, a sultone-based compound, a cyclic sulfate compound, a cyclic sulfite compound, a phosphate compound, and a borate compound.

The cyclic carbonate compound may include vinylene carbonate (VC), vinyl ethylene carbonate (VEC), and the like.

The fluorine-substituted cyclic carbonate compound may include fluoroethylene carbonate (FEC), etc.

The sultone-based compound may include 1,3-propane sultone, 1,3-propene sultone, 1,4-butane sultone, and the like.

The cyclic sulfate compound may include 1,2-ethylene sulfate, 1,2-propylene sulfate, and the like.

The cyclic sulfite compound may include ethylene sulfite, butylene sulfite, and the like.

The phosphate compound may include lithium difluoro bis(oxalate) phosphate, lithium difluoro phosphate, and the like.

The borate-based compound may include lithium bis(oxalate) borate, and the like.

In some embodiments, a solid electrolyte may be used instead of the aforementioned non-aqueous electrolyte. In this case, the lithium secondary battery may be manufactured in the form of an all-solid-state battery. Furthermore, a solid electrolyte layer may be disposed between the anode and the cathode instead of the aforementioned separator. Here, the solid electrolyte may include a polymer electrolyte, a sulfide-based electrolyte, an oxide-based electrolyte, and a gel polymer electrolyte.

The solid electrolyte may include a sulfide-based electrolyte. As non-limiting examples, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive integers, and Z is Ge, Zn, or Ga), Li₂S-GeS₂, Li₂S-SiS₂-Li₃PO₄, Li₂S-SiS₂-LiₚMO_{q}, (p, q are positive integers, M is P, Si, Ge, B, Al, Ga, or In), Li₇₋ₓPS₆₋ₓClₓ (0≤x≤2), Li₇₋ₓPS₆₋ₓBrₓ (0≤x≤2), Li₇₋ₓPS₆₋ₓIₓ (0≤x≤2), etc. These may be used alone or in combination of two or more thereof.

In an embodiment, the solid electrolyte may include, for example, Li₂O-B₂O₃-P₂O₅, Li₂O-SiO₂, Li₂O-B₂O₃, Li₂O-B₂O₃-ZnO, and the like.

The following will provide a further description of the embodiments of the present invention with reference to specific experimental examples. The embodiments and comparative examples included in the experimental examples are merely illustrative of the present invention and do not limit the scope of the appended claims. It is apparent to those skilled in the art that various changes and modifications to the embodiments are possible within the scope of the present invention and the technical concept thereof, and it is to be understood that such modifications and changes fall within the scope of the appended claims.

### <Example 1> - Cathode manufacture 1

A composition for manufacturing a cathode was prepared by adding 97.9 wt% of LiNi_{0.8}Co_{0.1}Mn_{0.1}O₂, 0.5 wt% of carbon nanotubes, 1.5 wt% of PVDF, and 0.1 wt% of acetyl tributyl citrate to NMP (N-methyl-2-pyrrolidone) as a solvent.

The aforementioned composition for manufacturing a cathode was coated onto an aluminum (Al) thin film serving as a cathode current collector with a thickness of approximately 20 µm, dried to manufacture the cathode, and then processed using a roll press to manufacture the cathode.

The manufactured cathode was slit into narrow widths, and the slit cathode sheet was notched into the shape of the actual battery to be used.

Thereafter, in a vacuum drying oven, the temperature was gradually increased for about 60 minutes up to 140°C, which is a temperature between Tc and Tm of PVDF, maintained at 150°C for 120 minutes, and then gradually decreased to room temperature over 20 minutes and dried, thereby manufacturing a cathode for a secondary battery.

### <Example 2> - Cathode manufacture 2

A cathode was manufactured in the same manner as in Example 1, except that a composition for manufacturing a cathode was prepared by adding 97.8 wt% of LiNi_{0.8}Co_{0.1}Mn_{0.1}O₂, 0.5 wt% of carbon nanotubes, 1.5 wt% of PVDF, and 0.2 wt% of acetyl tributyl citrate to NMP (N-methyl-2-pyrrolidone) as a solvent.

### <Example 3> - Cathode manufacture 3

A cathode was manufactured in the same manner as in Example 1, except that a composition for manufacturing a cathode was prepared by adding 97.7 wt% of LiNi_{0.8}Co_{0.1}Mn_{0.1}O₂, 0.5 wt% of carbon nanotubes, 1.5 wt% of PVDF, and 0.3 wt% of acetyl tributyl citrate to NMP (N-methyl-2-pyrrolidone) as a solvent.

### <Example 4> - Cathode manufacture 4

A cathode was manufactured in the same manner as in Example 1, except that a composition for manufacturing a cathode was prepared by adding 97.6 wt% of LiNi_{0.8}Co_{0.1}Mn_{0.1}O₂, 0.5 wt% of carbon nanotubes, 1.5 wt% of PVDF, and 0.4 wt% of acetyl tributyl citrate to NMP (N-methyl-2-pyrrolidone) as a solvent.

### <Example 5> - Cathode manufacture 5

A cathode was manufactured in the same manner as in Example 1, except that a composition for manufacturing a cathode was prepared by adding 97.5 wt% of LiNi_{0.8}Co_{0.1}Mn_{0.1}O₂, 0.5 wt% of carbon nanotubes, 1.5 wt% of PVDF, and 0.5 wt% of acetyl tributyl citrate to NMP (N-methyl-2-pyrrolidone) as a solvent.

### <Example 6> - Cathode manufacture 6

A cathode was manufactured in the same manner as in Example 1, except that a composition for manufacturing a cathode was prepared by adding 97.4 wt% of LiNi_{0.8}Co_{0.1}Mn_{0.1}O₂, 0.5 wt% of carbon nanotubes, 1.5 wt% of PVDF, and 0.6 wt% of acetyl tributyl citrate to NMP (N-methyl-2-pyrrolidone) as a solvent.

### <Comparative Example 1>

A cathode was manufactured in the same manner as in Example 1, except that a composition for manufacturing a cathode was prepared by adding 98.0 wt% of LiNi_{0.8}Co_{0.1}Mn_{0.1}O₂, 0.5 wt% of carbon nanotubes, and 1.5 wt% of PVDF to NMP (N-methyl-2-pyrrolidone) as a solvent.

### <Comparative Example 2>

A cathode was manufactured in the same manner as in Example 1, except that a composition for manufacturing a cathode was prepared by adding 96.5 wt% of LiNi_{0.8}Co_{0.1}Mn_{0.1}O₂, 0.5 wt% of carbon nanotubes, 1.5 wt% of PVDF, and 1.5 wt% of acetyl tributyl citrate to NMP (N-methyl-2-pyrrolidone) as a solvent.

### <Experimental Example 1> - Measurement of PVDF crystallinity

The crystallinity of PVDF used as a binder in Examples 1 to 6, Comparative Example 1, and Comparative Example 2 was measured using a DSC method. Specifically, after DSC measurement of the samples, the crystallinity was calculated by dividing the area value of the heat of fusion generated due to crystallization by a theoretical heat of fusion value corresponding to 100% crystallinity of PVDF (6.70 kJ/mol). Additionally, the crystallinity may be cross-validated by calculation using XRD and WAXS methods. The measured crystallinity values of PVDF in Examples 1 to 6, Comparative Example 1, and Comparative Example 2 are shown in Table 1.

**[Table 1]**

| | Comparative Example 1 | Example 1 | Example 2 | Example 3 | Example 4 | Example 5 | Example 6 | Comparative Example 2 |
|---|---|---|---|---|---|---|---|---|
| Plasticizer Addition Ratio (%) | 0 | 0.1 | 0.2 | 0.3 | 0.4 | 0.5 | 0.6 | 1.5 |
| PVDF Crystallinity (%) | 60.24 | 56.52 | 53.04 | 49.08 | 46.2 | 42.36 | 38.4 | 10.0 |

As shown in Table 1, the crystallinity of PVDF decreased as the content of the plasticizer in the composition for manufacturing the cathode increased. In other words, it can be confirmed through Experimental Example 1 that the crystallinity of the PVDF-based polymer used as a binder can be controlled by adjusting the content of the plasticizer.

### <Experimental Example 2> - Cathode performance test

First, the degree of cathode expansion in Examples 1 to 6, Comparative Example 1, and Comparative Example 2 was measured using an automated method employing a microscope (in which one corner point of the electrode was selected and the travel distance was measured while moving the microscope to another corner point) and a length measurement method using a loupe and a ruler as gauges. Specifically, the width and length of the cathode were measured before and after vacuum drying, and changes therein were calculated. Because the amount of change in the length of the cathode was greater, the degree of expansion was compared based on the length of the cathode.

In addition, the electrodes were cut into an area of 25 cm², and adhesion thereof was measured according to ASTM D4541 for Examples 1 to 6, Comparative Example 1, and Comparative Example 2.

Furthermore, cells manufactured using the respective electrodes of Examples 1 to 6, Comparative Example 1, and Comparative Example 2 were set to SOC 50, and a 1 C discharge current was applied for 10 seconds, after which direct current internal resistance (DCIR) was measured by calculating d(Voltage)/current.

The measured expansion, adhesion, and DC internal resistance of the cathode are shown in Table 2 below.

**[Table 2]**

| | Comparative Example 1 | Example 1 | Example 2 | Example 3 | Example 4 | Example 5 | Example 6 | Comparative Example 2 |
|---|---|---|---|---|---|---|---|---|
| Cathode Expansion (%) | 0.1 | 0.08 | 0.06 | 0.04 | 0.02 | 0.04 | 0.05 | 0.1 |
| Adhesion (N) | 0.4 | 0.44 | 0.48 | 0.51 | 0.59 | 0.52 | 0.43 | 0.3 |
| DCIR (mΩ) | 1.2 | 1.21 | 1.22 | 1.23 | 1.24 | 1/26 | Jan. 28 | 1.4 |

As shown in Table 2, it can be confirmed that Examples 1 to 6, in which the crystallinity of PVDF was adjusted to 10 to 60% through addition of a plasticizer, exhibited reduced cathode expansion as compared with Comparative Examples 1 and 2. Furthermore, it can be confirmed from Table 2 that Examples 1 to 6, in which the crystallinity of PVDF was adjusted to 10 to 60% through addition of a plasticizer, exhibited improved adhesion of the cathode as compared with Comparative Examples 1 and 2. In addition, referring to Table 2, it can be seen that the direct current internal resistance of the cathode increases as the amount of the added plasticizer increases.

In summary, by adjusting the crystallinity of a vinylidene-based polymer containing a halogen element (specifically, PVDF) to 10 to 60% through addition of a plasticizer, it is possible to provide a cathode for a secondary battery that suppresses cathode expansion and improves adhesion of the cathode while maintaining low direct current internal resistance of the cathode.

### [Industrial Applicability]

According to the present disclosure, there are provided a composition for cathode fabrication, a cathode for a secondary battery, and a secondary battery capable of preventing expansion of the cathode, and a composition for cathode fabrication, a cathode for a secondary battery, and a secondary battery capable of improving adhesion of a cathode mixture layer.

## Claims

1. A cathode for a secondary battery, comprising:
a cathode current collector; and
a cathode mixture layer disposed on at least one surface of the cathode current collector and comprising a cathode active material and a polymer, wherein
the polymer comprises a vinylidene-based polymer containing a halogen element, and
the polymer has a crystallinity of 10% to 60%.

2. The cathode of claim 1, wherein the polymer comprises a polyvinylidene fluoride (PVDF)-based polymer.

3. The cathode of claim 1, further comprising a plasticizer.

4. The cathode of claim 3, wherein the plasticizer has a molecular weight of 200 g/mol to 500 g/mol.

5. The cathode of claim 4, wherein the plasticizer comprises at least one selected from the group consisting of acetyltributyl citrate, dibutyl sebacate, diisooctyl azelate, triethyl citrate, glyceryl triacetate, dioctyl adipate, and polyethylene glycol.

6. A composition for manufacturing a cathode, comprising: a cathode active material, a polymer, and a plasticizer, wherein
the polymer comprises a vinylidene-based polymer containing a halogen element, and
the plasticizer has a molecular weight of 200 g/mol to 500 g/mol.

7. The composition of claim 6, wherein the polymer comprises a polyvinylidene fluoride (PVDF)-based polymer.

8. The composition of claim 6, wherein the plasticizer is contained in an amount of 0.1 wt% to 1 wt% based on total solids of the composition.

9. The composition of claim 6, further comprising an organic solvent.

10. The composition of claim 9, wherein the plasticizer is soluble in the organic solvent.

11. The composition of claim 6, wherein the plasticizer comprises at least one selected from the group consisting of acetyltributyl citrate, dibutyl sebacate, diisooctyl azelate, triethyl citrate, glyceryl triacetate, dioctyl adipate, and polyethylene glycol.

12. A secondary battery, comprising:
a cathode; and
an anode,
wherein the cathode comprising:
a cathode current collector; and
a cathode mixture layer disposed on at least one surface of the cathode current collector and comprising a cathode active material and a polymer, wherein
the polymer comprises a vinylidene-based polymer containing a halogen element, and
the polymer has a crystallinity of 10% to 60%.

13. The secondary battery of claim 12, wherein the polymer comprises a polyvinylidene fluoride (PVDF)-based polymer.

14. The secondary battery of claim 12, wherein the cathode comprises a plasticizer.

15. The secondary battery of claim 14, wherein the plasticizer comprises at least one selected from the group consisting of acetyltributyl citrate, dibutyl sebacate, diisooctyl azelate, triethyl citrate, glyceryl triacetate, dioctyl adipate, and polyethylene glycol.

16. The secondary battery of claim 12, further comprising a separator interposed between the cathode and the anode.
